(19) Europäisches Patentamt
European Patent Office
Office européen des brevets

(11) **EP 1 909 426 A2**

(12) **EUROPEAN PATENT APPLICATION**

(43) Date of publication:
**09.04.2008 Bulletin 2008/15**

(51) Int Cl.:
*H04L 1/18* (2006.01)

(21) Application number: **07010897.2**

(22) Date of filing: **01.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **04.10.2006 KR 20060097579**

(71) Applicant: **LG - Nortel Co., Ltd.**
**679, Yeoksam-dong**
**Gangnam-gu**
**Seoul (KR)**

(72) Inventor: **Chang, Il Doo**
**Anyang -si, Gyeonggi-do 431-764 (KR)**

(74) Representative: **Katérle, Axel**
**Wuesthoff & Wuesthoff**
**Patent- und Rechtsanwälte**
**Schweigerstraße 2**
**81541 München (DE)**

(54) **Method and device for controlling wireless resource assignment**

(57) A method for controlling radio resource assignment in a radio communication system obtains a radio communication variable broadcast from a base station to a terminal, and then assigns dynamically multiple carriers to a plurality of sub-channels based on the obtained radio communication variable.

## FIG. 3A

Sub-Band Carrier Assignment Scheme
(Frame Number=t)

**Description**

## BACKGROUND

1. **Field**

One or more embodiments described herein relate to mobile communications systems and methods.

2. **Background**

Orthogonal frequency division multiple access (OFDMA) systems use various schemes to assign radio resources to carry signals in a mobile communications system. These schemes are often used with one of a variety of error control algorithms in an attempt to achieve reliable performance.

In an environment where the states of radio channels do not change significantly over a predetermined time period, OFDMA systems have provided channels with poor quality. This is especially true in systems that use Hybrid Automatic Repeat reQuest (HARQ) technology for error correction. In these systems, a scheme may be employed to adjust and transmit radio resource parameters to a base station in order to achieve diversity gain. However, this scheme serves to increase scheduler complexity and decrease effective throughput.

## BRIEF DESCRIPTION OF THE DRAWINGS

The embodiments will be described in detail with reference to the following drawings in which like reference numerals refer to like elements wherein:

Fig. 1 is a diagram showing one embodiment of an OFDMA system;

Fig. 2 is an exploded block diagram of a mobile terminal such as shown in Fig. 1;

Figs. 3A-3C are diagrams illustrating one embodiment of sub-band carrier assignment method;

Figs. 4A-4C are diagrams illustrating one embodiment of an interleaved carrier assignment method; and

Figs. 5A-5C are diagrams illustrating one embodiment of a flexible carrier assignment method.

## DETAILED DESCRIPTION

Various types of error control algorithms have been used in communication systems. One type known as the ARQ (Automatic Repeat reQuest) type is used in a Data link protocol layer. Another type known as FEC (Forward Error Correction) is used in a physical layer. Another type known as HARQ (Hybrid Automatic Repeat reQuest) is a technology that controls error by combining the retransmission type and the forward error control type to improve the throughput of the system. HARQ is used in HSPDA (High Speed Downlink Packet Access) transmission, which is a 3.5 generation mobile communication technology. HARQ retransmits packets having errors, combines the originally transmitted information with the retransmitted information, and decodes the combined information. Such construction is used to decrease the number of retransmissions.

Three radio resource assignment schemes have principally been employed by OFDMA systems: sub-band carrier assignment scheme, interleaved carrier assignment scheme and flexible carrier assignment. In OFDMA systems, the radio resource assignment process is performed both in a base station and a mobile terminal. The mobile terminal receives from a radio resource assignment module (a scheduler) a radio resource assignment parameter and thereby performs radio resource assignment. This is the same when the HARQ technology is applied.

In an environment where the states of radio channels do not significantly change in a predetermined time period, the sub-band carrier assignment scheme, interleaved carrier assignment scheme and flexible carrier assignment scheme may provide channels with poor quality to a specific user for a prolonged time period. When a user is assigned with channels of poor quality in a system employing the HARQ technology, due to the continued poor quality of the assigned radio channels, any improvement in performance cannot be expected even with continued retransmissions unless the scheduler changes the radio resource assignment parameter assigned to the user.

When there are almost no changes in the channels, a diversity gain method can be employed to reduce the number of retransmissions. Some systems used the method of adjusting and transmitting radio resource parameters at a base station to obtain diversity gain. Such systems exhibit the problems of increased scheduler complexity and decreased effective throughput due to allocation of radio resources for parameter transmission and system efficiency dues to additional power consumption.

In accordance with one or more embodiments described herein, a method for controlling assignment of radio resources in an OFDMA system implementing HARQ technology may enhance the diversity gain of channels without reducing the efficiency of the system.

In order to obtain the diversity gain preferably without reducing the efficiency of the system, a frame number broadcast per frame can be used in allocating the radio resource. In accordance with one embodiment, a frame may be understood to be a unit for transmitting data between a base station and a mobile terminal. Such a frame is used to transmit data from a base station to a mobile terminal (downlink) and from a mobile terminal to a base station (uplink). The frame may include a frame number, which may define the transmission time thereof. The frame number may be called as a slot number, a packet number, etc., depending on the transmission characteristics of the system. The diversity gain can be obtained by changing the physical carriers assigned to each sub-channel in accordance with the change in the frame number, even if the logical sub-channels remain the same.

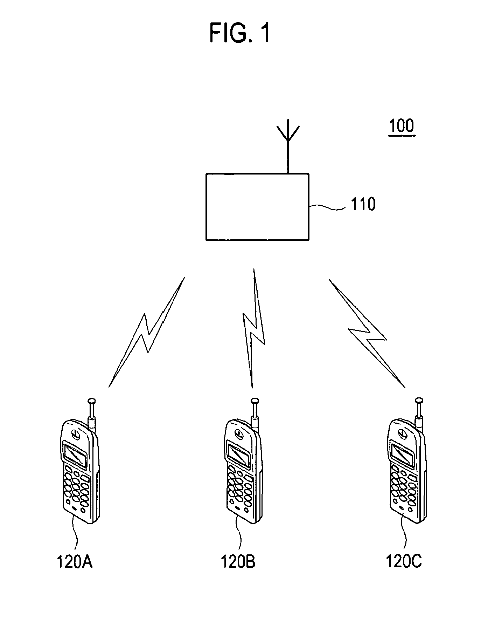

Fig. 1 shows one embodiment of an OFDMA system 100 which includes a base station 110 and a plurality of terminals 120a-120c. The terminals perform radio communications with the base station a frame as a data transmission unit. The system may be one of a multi-carrier radio communication system, in which each terminal 120a-120c uses a plurality of carriers of different frequencies to transmit by one data unit (e.g., one frame).

Base station 110 provides a plurality of carriers, for example, N carriers having a carrier number of 0 to N-1, to perform radio communications with the plurality of terminals within a cell perimeter circumscribing the base station and terminals 120a-120c. Each terminal may perform radio communications with the base station using, for example, one sub-channel. At this time, each channel may be assigned a certain number of sub-carriers among the N carriers. Each terminal 120a-120c may also transmit and receive a series of frames with the base station using carriers assigned to their own sub-channel.

According to one embodiment, each frame may include, together with data such as voice etc., a frame number representing the time the frame was transmitted. The frame number may be determined by the base station. For example, base station 110 may increase the frame number by, for example, one and broadcast the frame to terminals 120a-120c under control of the base station. The frame numbers for each terminal 120a-120c handled by the base station may be identical. In other embodiments, one or more of the frame numbers may be different.

The method for allocating carriers to a sub-channel of each of terminals 120a-120c may be further explained as follows. The radio resource assignment module (e.g., a scheduler) of base station 110 may determine for each terminal 120a-120c a prescribed radio resource assignment variable or parameter. The variable or parameter may then be transmitted to each terminal. Also, base station 110 may broadcast to the plurality of terminals 120a-120c a frame number per frame to transmit or receive data such as voice, etc. Each terminal 120a-120c then generates carrier numbers assigned to their own sub-channel based on the radio resource parameter and the frame number and a prescribed sequence generating function in each terminal 120a-120c.

Each terminal then performs radio communications with the base station using carriers that correspond to the generated carrier numbers. In selecting carriers assigned to their own sub-channel, each terminal 120a-120c uses the radio resource parameters so that the carriers assigned to each terminal 120a-120c do not overlap. Since the frame number changes per frame, the carriers used by each terminal 120a-120c changes per frame.

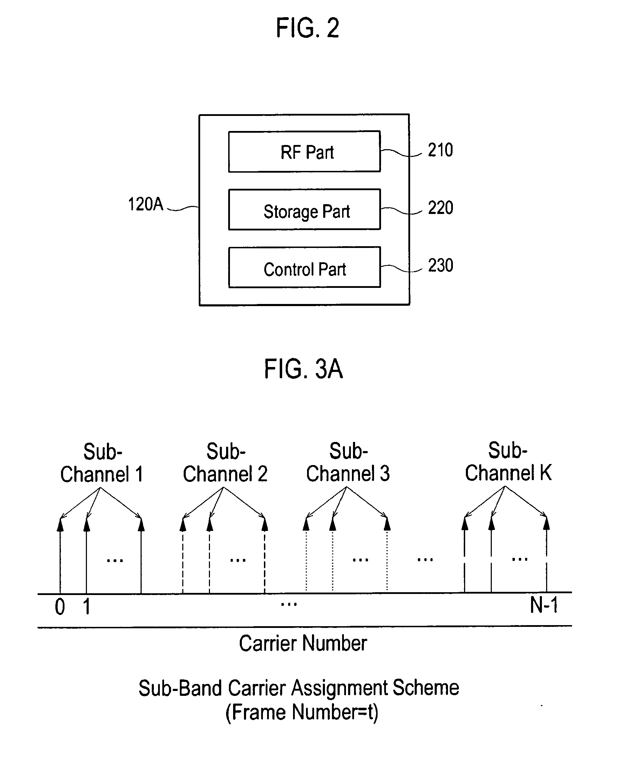

Fig. 2 is an exploded view of one of the terminals shown in Fig. 1. Referring to Fig. 2, terminal 120a may include an a RF part 210 for performing radio frequency wireless communication with base station 110 using a plurality of carriers, a storage part 220 for storing a prescribed sequence generation function and a radio resource assignment parameter, and a control part 230 for controlling RF part 210 and storage part 220.

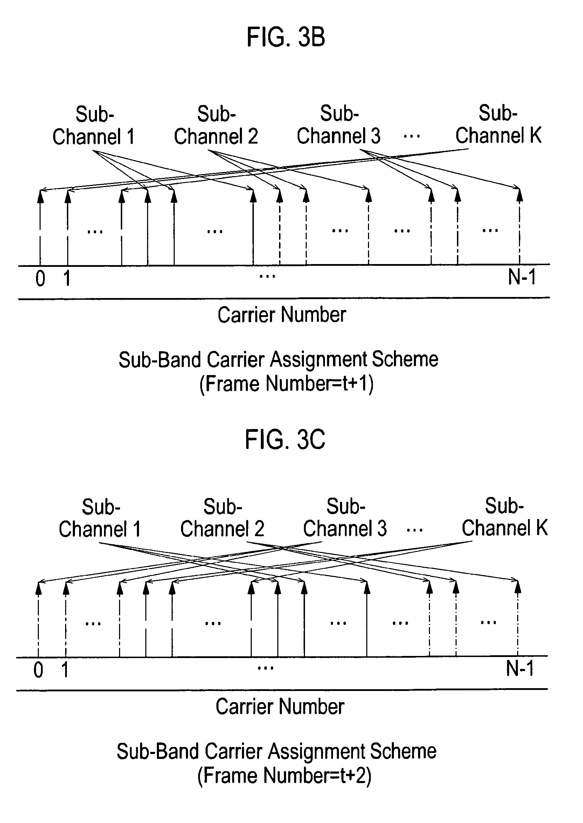

RF part 210 receives from base station 110 a radio resource assignment parameter and a frame number. Storage part 220 receives from the RF part and stores therein the received radio resource assignment parameter. Control part 230 selects carriers that are to be assigned to first terminal 120a among the plurality of carriers provided by the base station using the stored sequence generating function and the stored radio resource parameter and the receive frame number. The prescribed sequence generating function may be a sequence generating function in accordance with one of a sub-band carrier assignment method, an interleaved carrier assignment method, or a flexible carrier assignment method. A more detailed explanation of the carrier assignment steps is provided in relation to Figs. 3-5.

In explaining each of the carrier assignment methods, it is assumed that there are K users (i.e., K terminals) in OFDMA system 100. Assuming that each user uses one sub-channel, there must therefore be at least K sub-channels for all the users in OFDMA system.

Figs. 3A-3C illustrate one embodiment of the sub-band carrier assignment scheme, which divides the available carriers into K equal parts by the number of required sub-channels K and then assigns to each sub-channel each part of contiguous carriers. For example, when there are 50 available carriers (i.e. when N=50) and 10 sub-channels needed (i.e. K=10), 5 (=50/10) contiguous carriers (0-4, 5-9, 10-14 etc.) are assigned to each of the sub-channels (sub-channel 1, sub-channel 2, sub-channel 3 etc.). Fig. 3A illustrates such assignment scheme under conditions where the frame number at this time is assumed to be 't.'

In some OFDMA systems, even when there is a change in the frame number, the carrier numbers (pertaining to a physical layer) assigned to each of the sub-channels (pertaining to a logical layer) does not change and remains the same. Thus, when a certain physical channel is consistently under a poor environment, the user using the corresponding sub-channel experiences difficulty in performing error control, even when the retransmission is performed under the HARQ scheme. This is because the communication channel environment is consistently in a poor state.

However, according to the aforementioned embodiment, the carriers assigned to each of the sub-channels may be changed as the frame number changes. Figs. 3B and 3C illustrate a sub-band carrier assignment scheme in accordance with this embodiment, when the frame number is t+1 and t+2, respectively. Various schemes can exist in reflecting the frame number in assigning the carriers. In the illustrated example, as the frame number increases by one, the carrier numbers are increased by n (n=N/K).

For example, when N=50 and K=10, the number of carriers assigned to each sub-channel (n) is obtained by dividing 50 by 10, which equals 5. If sub-channels 1, 2, 3, etc., are each assigned carrier number 0-4, 5-9, 10-14, etc, respectively, when the frame number is t, then the carrier numbers assigned to the sub channels 1, 2, 3, etc., are each increased by 5 to become 5-9, 10-14, 15-19, etc., at frame number t+1. The sub channel 10, which was assigned the last of the carrier numbers, 45-49, at frame number t, is assigned by returning to the start of the carrier numbers, 0-4, at frame number t+1.

Likewise, when the frame number becomes t+2, the carrier numbers assigned to sub-channels 1, 2, 3, etc., are again increased by 5 such that the carrier numbers of 10-14, 15-19, 20-24, etc., are respectively assigned and sub-channel 9 is assigned to the start of the carrier numbers, 0-4. As such, the carrier numbers assigned to each sub-channel are varied and shifted as the frame number increases.

The aforementioned example explains the case where the carrier numbers are increased by n as the frame number increases. In other embodiments, the carrier numbers can vary by 2n, 3n, etc, or by various other schemes. Through these schemes, a desired diversity gain can be obtained by varying the physical carrier assigned as the frame number increases.

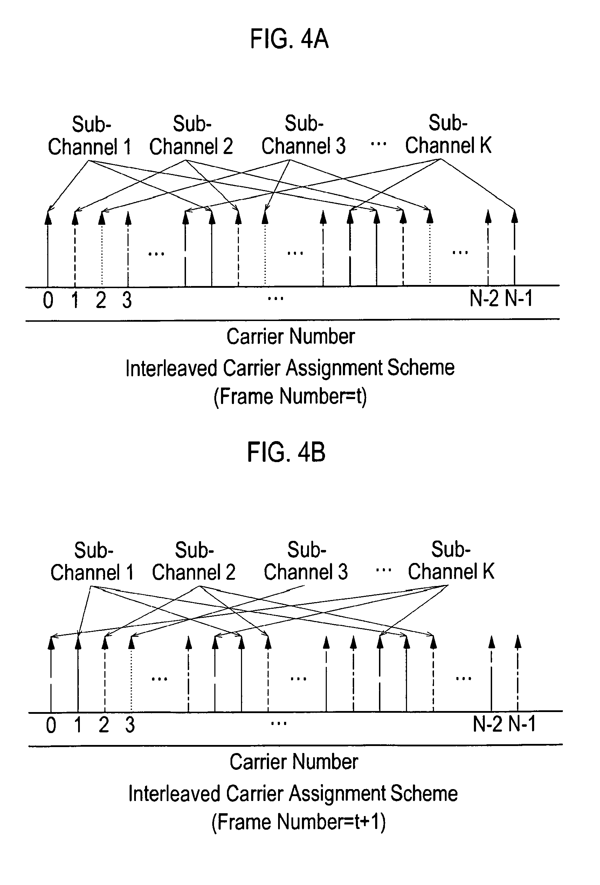

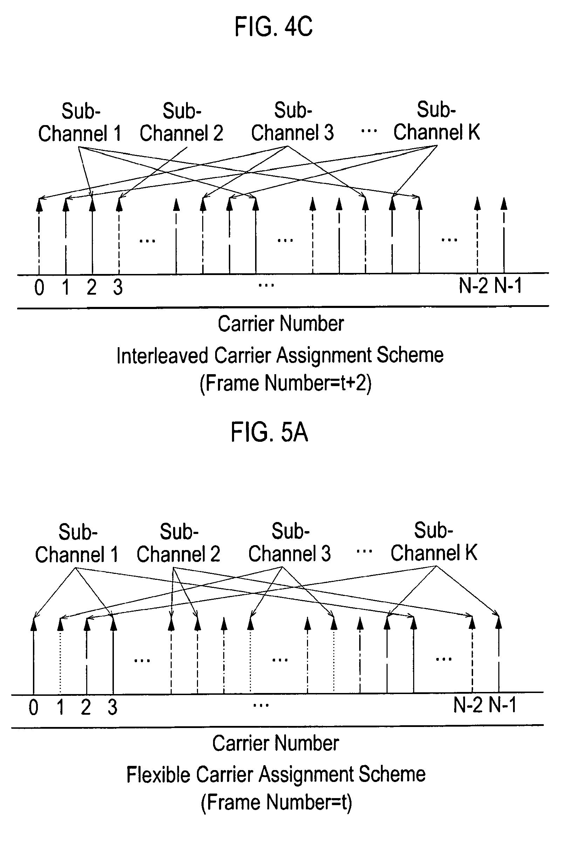

Fig. 4 illustrates one embodiment of an interleaved carrier, which as mentioned above, assigns available carrier numbers such as i, K+i, 2K +i, etc., to each sub-channel. For example, when there are 50 available carriers (i.e. N=50) and 10 sub-channels are required (i.e. K=10), a group of 5 carriers (e.g., (0, 10, 20, 30, 40), (1, 11, 21, 31, 41), (2, 12, 22, 32, 42) etc.) is assigned per sub-channel (e.g., sub-channel 1, sub-channel 2, sub-channel 3 etc., respectively). Fig. 4A illustrates such scheme under conditions where the frame number at this time is assumed to be 't.'

Similar to the aforementioned example, carriers assigned to each sub-channel may be varied as the frame number changes. Figs. 4B and 4C each illustrate the interleaved carrier assignment scheme when the frame number is t+1 and t+2, respectively. Various schemes can exist in reflecting the frame number in assigning the carriers. In the illustrated example, the assigned carrier numbers are incremented by one as the frame number increases by 1.

For example, when N=50 and K=10, the number of carriers to be assigned to each sub-channel (n) is obtained by dividing 50 by 10 (=5). If carrier numbers (0, 10, 20, 30, 40), (1, 11, 21, 31, 41), (2, 12, 22, 32, 42) etc. are each assigned to sub-channels 1, 2, 3, etc., at the frame number t, then the carrier numbers assigned to sub-channels 1, 2, 3, etc., are each incremented by 1 to become (1, 11, 21, 31, 41), (2, 12, 22, 32, 42), (3, 13, 23, 33, 43) etc. Sub-channel 10, which was assigned the carrier numbers including the last carrier number, (9, 19, 23, 39, 49) at frame number t+1, is assigned the carrier numbers that start at (0, 10, 20, 30, 40) at frame number t+1.

Likewise, when the frame number becomes t+2, the carrier number assigned to sub-channel is again increased by 1 to assign (2, 12, 22, 32, 42), (3, 13, 23, 33, 43), (4, 14, 24, 34, 44) etc. Sub-channel 9 is assigned to the carriers that start at the carrier numbers, (0, 10, 20, 30, 40). As such, as the frame number is incremented, the carrier numbers assigned to each sub-channel is shifted to be varied.

The aforementioned example corresponds to an instance where the assigned carrier numbers are incremented by 1 as the frame number increases. In other embodiments, the carrier number may increase by 2, 3, etc., and by various other values. Through these embodiments, as desired diversity gain may be obtained by varying the assigned physical carriers as the frame number increases.

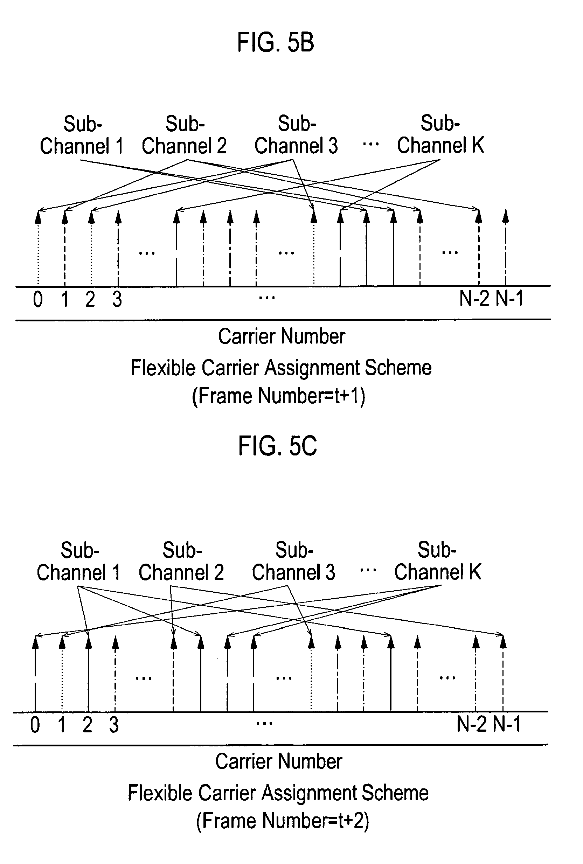

Fig. 5 shows one embodiment of a flexible carrier assignment scheme which assigns carriers available for each user in accordance with a prescribed rule. The assignment rule may be determined, for example, by an arbitrary equation set by an operator. Fig. 5A illustrates a scheme that assigns carriers in accordance with such prescribed equation under conditions where the frame number at this time is assumed to be 't.'

Similar to the aforementioned examples, in this instance the carriers assigned to each sub-channel may be varied as the frame number changes. Figs. 5B and 5C illustrate the flexible carrier assignment scheme, when the frame number is t+1 and t+2, respectively. Various schemes can exist in reflecting the frame number in assigning the carriers. For example, a certain value obtained by adding, subtracting, multiplying and/or dividing the frame number as one variable can be used in the sequence of the radio resource assignment scheme. Through these embodiments, a desired diversity gain can be obtained as long as the assigned physical carriers are changed as the frame number is incremented.

One example of a prescribed equation reflecting the frame number in accordance with the foregoing embodiments are shown below.

$$\text{Subcarrier}(n,s) = N_{subchannels} * n_k + \{p_s[n_k \bmod N_{subchannels}] + (\text{Frame}_N \bmod \text{IDcell})\} \bmod$$

$N_{subchannels},$

where:

Subcarrier(n,s) is the subcarrier index of subcarrier n in subchannels s

s is the index number of a subchannel, from the set [0 ... $N_{subchannels}$ -1]

nk=(k+13*s) mod $N_{subcarriers}$

k is the subcarrier-in-subchannel index from the set [0 ... $N_{subcarriers}$-1]

$N_{subchannels}$ is the number of subchannels

$P_{s[]}$ is the series obtained by rotating {PermutationBase} cyclically to the left s times. (Ex. PermutationBase= {3, 18, 2, 8, 16, 10, 11, 15, 26, 22, 6, 9, 27, 20, 25, 1, 29, 7, 21, 5, 28, 31, 23, 17, 4, 24, 0, 13, 12, 19, 14, 30})

$\text{Frame}_N$ is the current frame number.

IDcell is an integer which identifies the particular BS segment and is specified by MAC layer

X mod k is the remainder of the quotient X/k (which is at most k-1)

Using the above equation, the radio resource assignment control method is implemented to add the frame number as a variable as previously described, such that a desired diversity gain can be easily obtained using different physical carriers, without a scheduler changing the logical sub-channels used in retransmission by separate assignments.

When chase-combining HARQ is used as an error control technique in a communication system, the receiver, upon occurrence of a retransmission due to a NACK message, combines all the information from the data received up to that time. At this time, in order to maximize the efficiency of the combining operation, the diversity gain of channels is needed. Also, when incremental redundancy HARQ is used, any expectation in performance due to retransmissions requires the diversity gain of channels. According to the embodiments described herein, in both the aforementioned HARQ techniques, the diversity gain of channels can be obtained by using a different resource assignment area upon occurrence of a retransmission. Thus, performance enhancement can be achieved upon retransmission.

In an OFDMA-HARQ system using the chase combining technique, when an error occurs in a transmitted frame of time t, there is a high possibility that the $t^{th}$ radio channel is in poor condition. Thus, a desired diversity gain can be expected by using a radio resource assignment method in accordance with the present embodiments when retransmitting at the $t+1^{th}$ frame, thereby reducing the probability of error by combining the information.

Also, in an OFDMA-HARQ system using incremental redundancy techniques, when an error occurs in a transmitted frame of time t, there is a high possibility that the $t^{th}$ radio channel is in poor condition. Thus, a desired diversity gain can be achieved by using a radio resource assignment method in accordance with the present embodiments when retransmitting at the $t+1^{th}$ frame, thereby securing reliability of additional redundancy information and reducing the possibility of error when decoding by combining with the information transmitted before.

The radio resource assignment schemes in accordance with the present embodiments can be modified in various ways in their implementations. They can, for example, be applied in a same manner when using not only a HARQ technique, but also when using a general resource assignment technique. Also, they may not be affected by the particular types of the HARQ technique (e.g. chase combining and incremental redundancy, etc.) used and may use a variable other than the frame number that is commonly broadcast to all terminals by a base station. A technique in which a radio resource assignment method is automatically changed over time may especially be used.

In the aforementioned embodiments, a system using OFDMA technique was described as an example, but any communication system employing a multi-carrier technology can be used. Also, the present embodiments can be applied to both TDD (Time Division Duplex) and FDD (Frequency Division Duplex) systems.

Moreover, the radio resource assignment method in accordance with the present embodiments may not decrease the throughput of the system, since the scheduler does not have to transmit additional information to the base station and the terminals. Also, the present embodiments may be implemented by simply modifying existing radio resource assignment techniques and may overcome a poor radio channel environment by simple application. Further, in accordance with the present embodiments, performance improvement due to a desired diversity gain can be achieved, especially in a terminal assigned with channels that vary slowly in their radio environment with time.

A method in accordance with one embodiment comprises obtaining a radio communication variable broadcast from a base station to a terminal and dynamically assigning multiple carriers to a plurality of sub-channels based on the obtained radio communication variable. The broadcast radio communication variable may include time information or a frame number. Also, the radio communication system using multiple carriers may be an OFDMA system. The radio communication system may further use a HARQ technique, and the dynamically assigning step may be only performed when a retransmission is performed due to occurrence of a transmission failure.

A terminal device of a multiple carrier radio communication system in accordance with one embodiment comprises a RF part configured to obtain a radio communication variable from a base station and a control part configured to select, among a plurality of carriers, carriers that is to be assigned to a sub-channel of the terminal device based on the obtained radio communication variable. The base station provides the plurality of carriers and the radio communication variable broadcast from the base station to the terminal device.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A method for controlling radio resource assignment in a radio communication system, comprising:

   obtaining a radio communication variable broadcast from a base station to a terminal, and
   assigning dynamically multiple carriers to a plurality of sub-channels based on the obtained radio communication variable.

2. The method of claim 1, wherein said obtaining comprises obtaining a radio resource assignment variable transmitted from the base station to the terminal, and
   wherein said assigning comprises assigning dynamically the multiple carriers to the plurality of sub-channels based on the obtained radio resource assignment variable and the radio communication variable.

3. The method of claim 2, wherein said assigning comprises:

   preparing a prescribed sequence generating function having the radio resource assignment variable and the radio communication variable as its variables, and
   generating a series of sequences indicating the carriers to be assigned to the plurality of sub-channels in accordance with the radio resource assignment variable and the radio communication variable and the prescribed sequence generating function.

4. The method of claim 3, wherein the prescribed sequence generating function is a sequence generating function in accordance with one of a sub-band carrier assignment scheme, an interleaved carrier assignment scheme, or a flexible carrier assignment scheme.

5. The method of claim 1, wherein said radio communication variable is a time-varying variable.

6. The method of claim 5, wherein said radio communication variable includes a number assigned to a data transmission unit of the radio communication system.

7. The method of claim 6, wherein said radio communication variable includes a frame number.

8. The method of claim 1, wherein the radio communication system using the multiple carriers is a system using OFDMA technology.

9. The method of claim 1, wherein said radio communication system uses a HARQ method and
   said assigning is performed when a retransmission is performed due to an occurrence of a transmission error.

**10.** The method of claim 1, wherein said assigning comprises:

> performing an arithmetic operation on the obtained variable, and
> assigning the multiple carriers to the plurality of sub-channels based on a value obtained by said arithmetic operation.

**11.** A terminal device of a multi-carrier radio communication system, comprising
a RF part configured to obtain a radio communication variable from a base station, and
a control part configured to select, among the plurality of carriers, carriers that is to be assigned to a sub-channel of the terminal based on the obtained radio communication variable.

**12.** The device of claim 11, wherein
said RF part receives a radio resource assignment variable from the base station, and
wherein said control part selects the carriers to assigned to the sub-channel of the terminal based on the received radio resource assignment variable and the radio communication variable.

**13.** The device of claim 12, wherein said control part:

> selects a prescribed sequence generating function having the radio resource assignment variable and the radio communication variable as its variables; and
> generates a series of sequences indicating the carriers to be assigned to the plurality of sub-channels in accordance with the radio resource assignment variable and the radio communication variable and the prescribed sequence generating function

**14.** The device of claim 11, wherein said radio communication variable is a time-varying variable.

**15.** The device of claim 14, wherein said radio communication variable includes a number assigned to a data transmission unit of the radio communication system.

# FIG. 1

# FIG. 2

| | |
|---|---|
| RF Part | 210 |
| Storage Part | 220 |
| Control Part | 230 |

120A

# FIG. 3A

Sub-Channel 1    Sub-Channel 2    Sub-Channel 3    Sub-Channel K

0  1                    ...                              N-1

Carrier Number

Sub-Band Carrier Assignment Scheme
(Frame Number=t)

## FIG. 3B

Sub-Channel 1   Sub-Channel 2   Sub-Channel 3   ···   Sub-Channel K

0   1   ···   N-1

Carrier Number

Sub-Band Carrier Assignment Scheme
(Frame Number=t+1)

## FIG. 3C

Sub-Channel 1   Sub-Channel 2   Sub-Channel 3   ···   Sub-Channel K

0   1   ···   N-1

Carrier Number

Sub-Band Carrier Assignment Scheme
(Frame Number=t+2)

## FIG. 4A

Sub-Channel 1    Sub-Channel 2    Sub-Channel 3    ···    Sub-Channel K

0  1  2  3    ···    N-2  N-1

Carrier Number

Interleaved Carrier Assignment Scheme
(Frame Number=t)

## FIG. 4B

Sub-Channel 1    Sub-Channel 2    Sub-Channel 3    ···    Sub-Channel K

0  1  2  3    ···    N-2  N-1

Carrier Number

Interleaved Carrier Assignment Scheme
(Frame Number=t+1)

# FIG. 4C

Sub-Channel 1   Sub-Channel 2   Sub-Channel 3   ···   Sub-Channel K

0  1  2  3      ···              N-2 N-1

Carrier Number

Interleaved Carrier Assignment Scheme
(Frame Number=t+2)

# FIG. 5A

Sub-Channel 1   Sub-Channel 2   Sub-Channel 3   ···   Sub-Channel K

0  1  2  3              ···              N-2 N-1

Carrier Number

Flexible Carrier Assignment Scheme
(Frame Number=t)

# FIG. 5B

Sub-
Channel 1   Sub-
Channel 2   Sub-
Channel 3  ···  Sub-
Channel K

0  1  2  3  ···  N-2 N-1

Carrier Number

Flexible Carrier Assignment Scheme
(Frame Number=t+1)

# FIG. 5C

Sub-
Channel 1   Sub-
Channel 2   Sub-
Channel 3  ···  Sub-
Channel K

0  1  2  3  ···  N-2 N-1

Carrier Number

Flexible Carrier Assignment Scheme
(Frame Number=t+2)